# EUROPEAN PATENT APPLICATION

(11) **EP 0 884 906 A1**
(43) Date of publication of application: **16.12.1998**
(21) Application number: 98401352.4
(22) Date of filing: 08.06.1998
(51) Int. Cl.: H04N 7/167, H04N 7/16

(54) **Conditional access system with programmable mode of access**

(30) Priority: 10.06.1997 FR 9707179
(71) Applicant: THOMSON multimedia, 92100 Boulogne Billancourt (FR)
(72) Inventor: Campinos, Arnaldo, 92100 Boulogne (FR)
(74) Representative: Ruellan-Lemonnier, Brigitte

(57) **Abstract**

The invention relates to a conditional access system.

In a conditional access system, a service provider supplies the user with access conditions relating to various modes of access (for example the "subscriber" mode or else the "pay per view" mode) and user entitlements relating to these various access conditions. The smartcard which the service provider delivers to each user comprises a program making it possible to validate the access conditions and the user's entitlements, to compare the validated access conditions with the user's validated entitlements and, depending on the result of the comparison, to execute management operations relating to certain services.

According to the invention, the modes of access take the form of access mode descriptors each consisting of a descriptor of a comparison operation and of a descriptor of a management operation. The smartcard comprises an interpreter module which determines the authorized modes of access and, for each authorized mode of access, searches for the descriptor of the mode of access and performs the comparison and management operations.

The conditional access system according to the invention allows the access mode descriptors in the user's smartcard to be modified by downloading.

## Description

The present invention relates to a conditional access system.

A conditional access system enables a service provider to supply his services only to those users who have acquired entitlements to these services. Such is the case, for example, with pay television systems.

As is known to those skilled in the art, the service supplied by a service provider consists of an item scrambled by control words. The scrambled item can only be descrambled, and hence read by the user, in line with the entitlements allocated to this user. The scrambled item will henceforth be denoted IE(ECG), where ECG represents the unscrambled item (the abbreviation ECG standing for "Electronically Coded Good").

In order to descramble the item, the service provider supplies each user with the control words which served to scramble the item. So as to keep the control words secret, they are supplied after having been encrypted with an algorithm with key K. The various encrypted control words are sent to the various users in control messages which will subsequently be denoted ECM (the abbreviation ECM standing for "Entitlement Control Message").

In order to grant access to his service to authorized users only, the service provider supplies each of the users with a smartcard and a decoder.

The smartcard makes it possible, on the one hand, to validate and record the entitlements of the user to the service delivered and, on the other hand, to decrypt, with the aid of the key K, the encrypted control words. To this end, the smartcard contains the key K of the algorithm which allowed the encryption of the control words.

The decoder, for its part, makes it possible to descramble the scrambled item on the basis of the item consisting of the decrypted control words from the smartcard.

Each user's entitlements are sent in messages for managing the user's entitlements which will subsequently be denoted EMM (the abbreviation EMM standing for "Entitlement Management Message").

According to the prior art, an EMM message consists of a header and a body. The body of the EMM contains three main items:
- a first item giving the address of the card of the user;
- a second item giving the description of the user's entitlements;
- a third item making it possible to validate the EMM and to verify that the user's entitlements contained in the EMM are indeed the entitlements reserved for the user.

As mentioned earlier, the encrypted control words are sent to the users via the ECMs.

According to the prior art, an ECM consists of a header and a body.

The header gives, among other things, the type and size of the items contained in the body of the ECM.

The body consists, among other things, of an item containing all the conditions of access to the service supplied by the provider, of an item containing at least one control word encrypted with the algorithm with key K and of an item containing a datum dependent on the key K and making it possible to validate and verify the contents of the ECM and, more particularly, access conditions contained in the ECM.

When the decoder of a user recognizes the address of the card associated with him from among the various addresses distributed by the service provider, the EMM corresponding to the recognized address is analysed. The analysis of the EMM is performed with the aid of an analysis algorithm controlled by the key K for encrypting the control words.

If the analysis of the EMM message leads to the validating of the latter, the user's entitlements are then stored in a memory designed for this purpose.

The user card also comprises a circuit for validating the ECMs, an access control circuit and a circuit for decrypting the encrypted control words.

The circuit validating the ECMs makes it possible to perform, on the access conditions contained in the ECMs, operations identical to those performed on the user's entitlements by the circuit for analysing the EMM messages.

If the access conditions are validated, the function of the access control circuit is to compare the validated access conditions with the user's validated entitlements.

According to the prior art, the comparison of the validated access conditions with the user's validated entitlements is performed according to one or more various modes of access preprogrammed into the access control circuit.

The term mode of access should be understood to mean a category of services which a service provider offers his customers. This may, for example, be the "subscriber" mode for which the user buys access to a service for a certain duration, or else the "pay per view" mode for which the user buys the entitlement to watch a particular programme broadcast at a particular time.

The various operations attached to one and the same mode of access are of two types:
- a first type concerns the operation for comparing the validated access conditions with the user's validated entitlements, as mentioned above;
- a second type concerns the management operations executed subsequent to the comparison function and the nature and number of which depends on the result of the comparison. Thus, for example, a signal authorizing the decrypting of the control words is transmitted to the decryption circuit if access is authorized.

As mentioned above, according to the prior art, various operations attached to a mode of access are all preprogrammed into the access control circuit contained in the user card. Thus, in the case in which a service provider wishes to offer a new mode of access to his customers, it is necessary for him to change the entire stock of user cards.

The various operations relating to a new mode of access are then programmed into the new user cards which the service provider distributes to his customers.

This represents a drawback, especially in terms of costs.

In general, according to the prior art, the programs which allow the decoder and the user card to operate are not developed by the service provider himself. These programs are then developed by a provider of conditional access programs, depending on specifications drawn up by the service provider.

Thus, according to the prior art, conditional access programs specific to the decoder and to the user card are designed for each new application and for each service provider.

It is also then almost impossible for a provider of conditional access programs who has produced a program relating to a first application to adapt this program to a new application whose requirements in terms of access modes are substantially different from those of the first application. This presents another drawback.

The invention does not present the drawbacks mentioned above.

Thus, the invention relates to a message (ECM) containing access conditions (CDA) relating to at least one mode of access offered by a service provider. The message (ECM) contains a datum making it possible to identify and validate the mode of access.

The invention also relates to a message (EMM) containing a description of the entitlements possessed by a user with regard to at least one service delivered by a service provider. The description of the user's entitlements consists of a string of fields, each field comprising the description of an entitlement.

The invention also relates to a conditional access system management message enabling a service provider to supply his services, according to at least one mode of access, to a user who has acquired entitlements to these services. The message contains at least one descriptor of at least one mode of access.

The invention further relates to a process for loading into a security element access conditions relating to at least one mode of access offered by a service provider. The process consists in loading the access conditions in the form of a string of fields, each field comprising the description of an access condition.

The invention further relates to a process for loading into a security element entitlements possessed by a user with regard to at least one service delivered by a service provider. The process consists in loading said entitlements in the form of a string of fields, each field comprising the description of an entitlement.

The invention further relates to a process for loading into a security element at least one mode of access relating to a service offered by a service provider. The process comprises a step making it possible to load at least one datum making it possible to identify and validate the mode of access and a step making it possible to load at least one descriptor of the mode of access.

The invention further relates to a process making it possible to descramble a scrambled service supplied to a user, said process comprising at least one step making it possible to load into a security element at least one mode of access relating to said service, at least one step making it possible to supply, via a first message, a description of the conditions of access to the scrambled service, at least one step making it possible to supply, via a second message, a description of the user's entitlements to the scrambled service and a step making it possible to validate the user's entitlements. The step making it possible to load into a security element at least one mode of access comprises a step of loading at least one datum making it possible to identify and validate the mode of access and a step of loading at least one descriptor of the mode of access comprising a descriptor of a comparison operation and a descriptor of a management operation, the step making it possible to supply a description of the access conditions makes it possible to define the access conditions as a first string of fields and the step making it possible to supply a description of the user's entitlements makes it possible to define the user's entitlements as a second string of fields.

The invention further relates to a security element enabling a user to access a service, the security element comprising a first memory circuit making it possible to store the validated entitlements possessed by the user with regard to the service and an access control circuit making it possible to compare with the validated entitlements the validated access conditions associated with at least one mode of access. The security element comprises a second memory circuit making it possible to store at least one mode of access in the form of descriptors of the mode of access and the access control circuit comprises an interpreter module making it possible to determine whether at least one mode of access is or is not authorized and, for an authorized mode of access, to search for at least one descriptor of the authorized mode of access, the descriptor of the authorized mode of access comprising a descriptor of a comparison operation and a descriptor of a management operation, the implementation of the management operation following upon the comparison operation and making it possible to generate a signal authorizing or not authorizing access to the service.

The invention further relates to a conditional access system enabling a service provider to supply his services only to users who have acquired entitlements to these services, the services consisting of an item scrambled by control words, the system comprising, for each user, at least one decoder and at least one security element. The security element is a security element such as that mentioned above according to the invention.

According to the invention, each operation relating to a mode of access is coded in the form of a descriptor of the operation. The term descriptor of an operation should be understood to mean a set of elementary data making it possible to reconstruct the operation on the basis of an interpretation program.

In the remainder of the description, the descriptor of an operation relating to a mode of access will be referred to as an access mode descriptor.

According to the preferred embodiment of the invention, an access mode descriptor consists of a descriptor of a comparison operation and of a descriptor of a management operation. This type of descriptor advantageously makes it possible to define a large number of functions.

Moreover, still according to the invention, the access conditions as well as the entitlements of the users are described in the form of a string of fields of variable Lengths.

Unlike a prior art conditional access system, the conditional access system according to the invention thus offers the advantage of very high flexibility of implementation.

As mentioned earlier, one advantage of the invention is that it avoids the need for the service provider to have to change the entire stock of user cards which he distributes when he wishes to modify the various modes of access which he wishes to offer.

Other characteristics and advantages of the invention will emerge on reading a preferred embodiment of the invention given with reference to the appended figures in which:
- Figure 1 represents an access mode descriptor loading message according to the invention;
- Figure 2a represents an EMM type user entitlement management message according to the invention;
- Figure 2b represents a detail view of Figure 2a;
- Figure 3a represents an ECM type control message according to the invention;
- Figure 3b represents a detail view of Figure 3a;
- Figure 4 represents the schematic of a security element according to the invention.

In all the figures, the same labels denote the same elements.

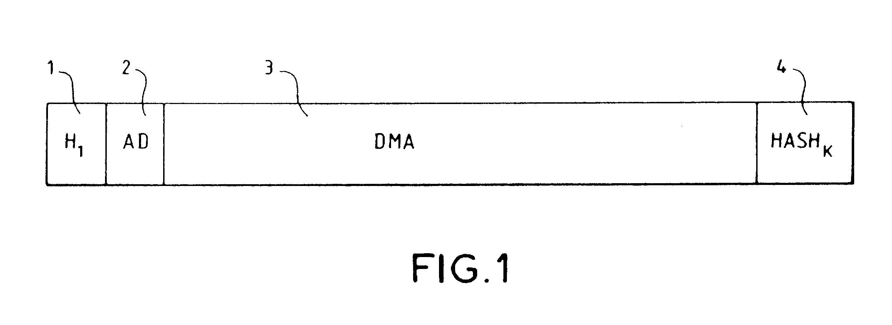

Figure 1 represents an access mode descriptor loading message according to the invention.

The access mode descriptor loading message consists of a block 1 containing the header H1 of the message, a block 2 containing the address AD of a user for whom the message is intended, a body 3 containing the descriptor DMA of at least one mode of access and a block 4 containing a datum HASH_{K} making it possible to validate and verify the contents of the message. The datum KASH_{K} is controlled by the key K for encrypting the control words.

As mentioned earlier, according to the preferred embodiment of the invention, each access mode descriptor consists of a descriptor of a comparison operation and of a descriptor of a management operation.

As far as the comparison operation is concerned, it can be modelled, for example, as a Boolean function whose parameters are Booleans which are themselves the result of elementary comparison functions.

In general, the descriptor of the comparison function of an access mode according to the invention consists of the following elements:
- a list of elementary operators each of which is followed by the identifiers of its parameters;
- the formula for the comparison operation itself.

As far as the management operation is concerned, its implementation consists in incorporating a list of basic management functions into the interpreter and in defining the descriptor of the management operation as a string of functions for calling up each basic management function. Each call function includes an identifier of the basic management function associated therewith as well as identifiers of the input parameters, and possibly output parameters, of the basic management function.

Each descriptor of the management operation also comprises an item which indicates, depending on the result of the comparison, whether the management operation is or is not to be executed.

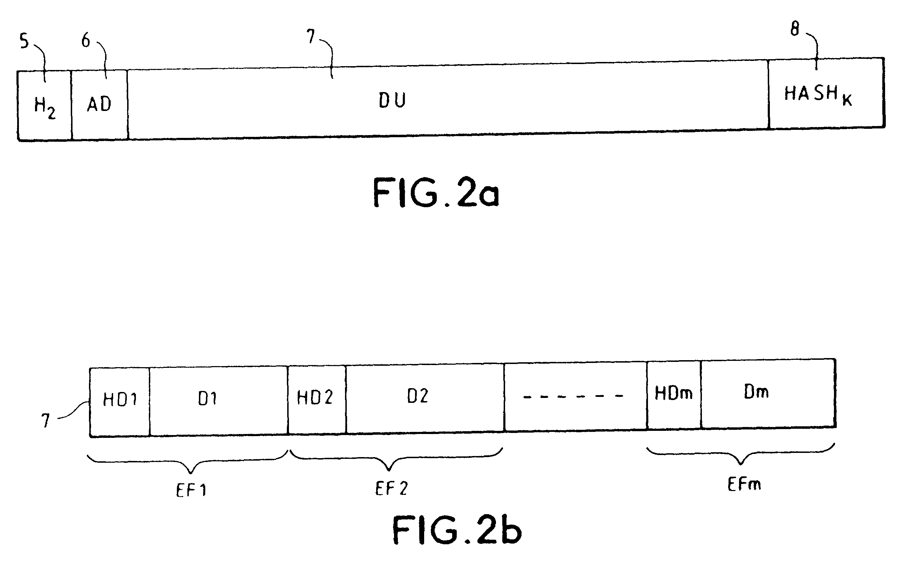

Figure 2a represents an EMM type user entitlement management message according to the invention.

The user entitlement management message consists of a block 5 containing the header H2 of the message, a block 6 containlng the address AD of a user for whom the message is intended, a body 7 containing the description DU of the user's entitlements according to the invention and a block 8 containing a datum HASH_{K} making it possible to validate and verify the contents of the message. The datum HASH_{K} is controlled by the key K for encrypting the control words.

Figure 2b represents the detailed view of the block 7 containing the description of the user's entitlements according to the invention.

The description of the user's entitlements is composed of a string of fields EF1, EF2, ..., EFm.

Each field EFj (j=1, 2, ..., m) comprises a header HDj and the description of an entitlement Dj. The header HDj contains an indentifier of the field as well as a datum representing the size of the field.

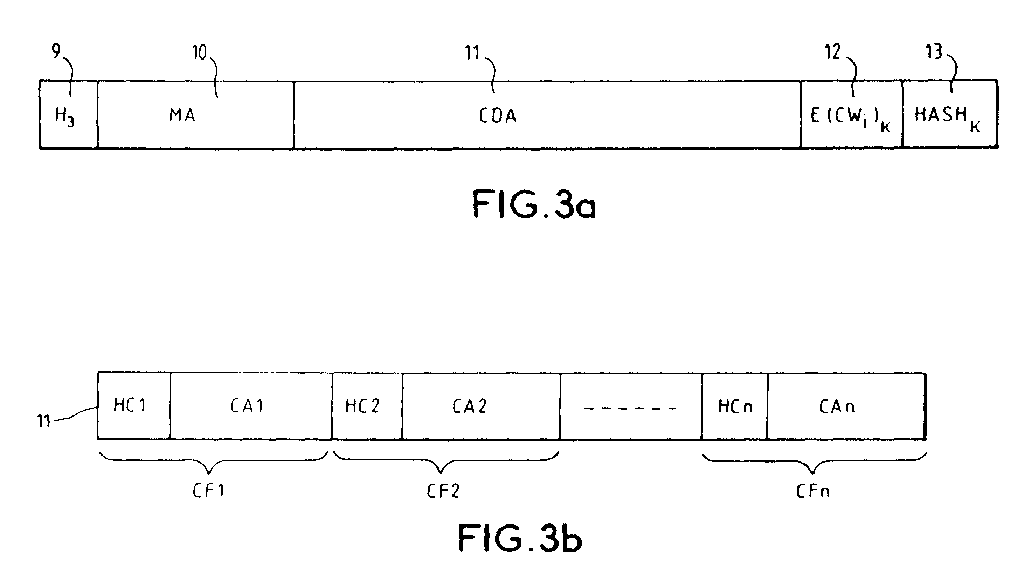

Figure 3a represents an ECM type control message according to the invention.

The ECM type control message consists of a block 9 containing the header H3 of the message, a block 10 containing a datum MA making it possible to list the various modes of access via which the services supplied can be accessed by the users, a body 11 containing the description CDA of the various access conditions, a block 12 containing the control words E(CWi)_{K} encrypted with the encryption algorithm with key K and a block 13 containing a datum HASH_{K} making it possible to validate and verify the contents of the message. The datum HASH_{K} is controlled by the key K for encrypting the control words.

The datum MA consists of a string of items each relating to a different mode of access. Each item relating to a mode of access consists of a code representative of the mode of access and of a binary item making it possible to indicate whether the mode of access is or is not accessible to the user.

Figure 3b represents the detailed view of the block 11 containing the description of the access conditions according to the invention.

The description of the access conditions is composed of a string of fields CF1, CF2, ..., CFn.

Each field CFj (j = 1, 2 ..., n) comprises a header HCj and the description of an access condition CAj. The header HCj contains an identifier of the field as well as a datum representing the size of the field.

Advantageously, the formats of the EMM and ECM messages according to the invention are independent of the nature and of the number of access modes used. These formats are therefore very flexible by nature and adapt easily to any application and to any type of access mode.

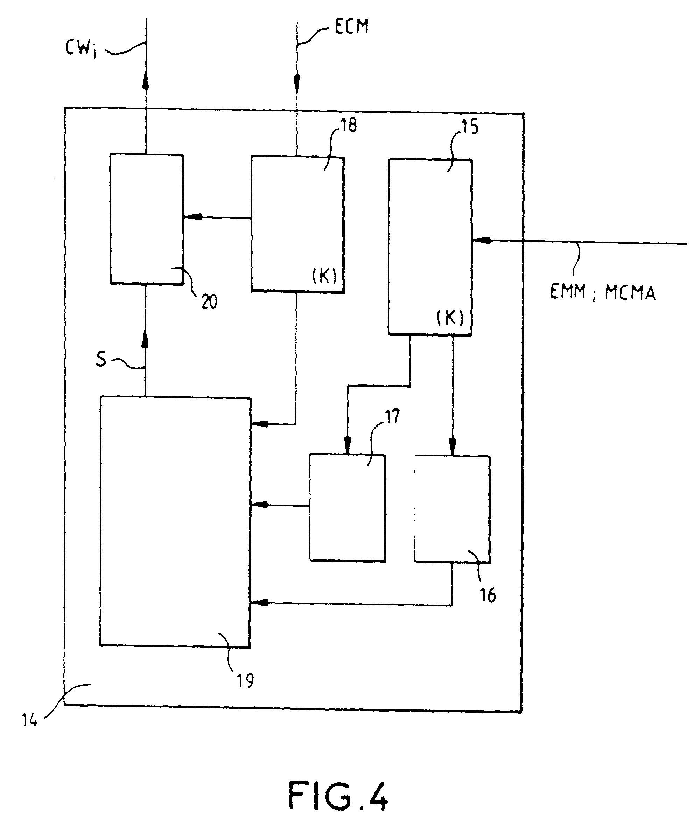

Figure 4 represents the schematic of a security element according to the preferred embodiment of the invention. The security element 14 is preferably a smartcard.

The smartcard 14 principally comprises six circuits:
- a circuit 15 for validating the EMM type user entitlement management messages and the messages for loading the access mode descriptors;
- a circuit 16 for storing the user's validated entitlements;
- a circuit 17 for storing the descriptors of the access modes;
- a circuit 18 for validating the ECM type messages;
- a circuit 19 for access control;
- a circuit 20 for decrypting the encrypted control words.

On its input, the circuit 15 receives either the EMM messages, or the messages for loading the access mode descriptors MCMA.

The function of the circuit 15 is to verify the validity of the EMM messages as well as that of the MCMA messages. To this end, the circuit 15 contains the key K of the algorithm for encrypting the control words.

If an EMM message is validated, then the user's entitlements which it contains are stored in the circuit 16. Likewise, if an MCMA message is validated, then the access mode descriptors which it contains are stored in the circuit 17.

Preferably, the memory area of the circuit 17, in which the access mode descriptors are stored, is an electronically erasable memory commonly referred to as EEPROM (EEPROM standing for "Electronically Erasable and Programmable Read Only Memory"). Advantageously, the access mode descriptors can then be modified or changed by downloading.

However, the invention also relates to the case in which the memory area of the circuit 17 is a non-erasable memory commonly referred to as ROM (the abbreviation ROM standing for "Read Only Memory"). The access mode descriptors may not then be modified.

According to the invention, at the time it is put into circulation, a smartcard can contain access mode descriptors either essentially in an EEPROM type memory area, or essentially in a ROM type memory area, or in both an EEPROM type memory area and a ROM type memory area.

Preferably, the access mode descriptors defined when the smartcard is put into circulation are stored in a ROM type memory area.

The function of the circuit 18 is to verify the validity of the ECM messages. To this end, the circuit 18 contains the key K of the algorithm for encrypting the control words.

The access control circuit 19 comprises an interpreter module making it possible to control access to the programs. The function of the interpreter module is to determine whether the user may have access to the program selected on the basis of three types of parameters:
- the user's validated entitlements;
- the access conditions contained in the current ECM message;
- the access mode descriptors.

Via the datum MA contained in the current ECM message, the interpreter module determines the authorized access modes.

For each of the authorized access modes, the interpreter module searches for the access mode descriptor which corresponds thereto and, for each of the validated entitlements of the user of the card in the selected mode of access, executes the function for comparing between at least one field CFi of the ECM message and at least one field EFj of the EMM message. The fields CFi and EFj being provided with identifiers, their use may advantageously be specified by the elementary comparison functions mentioned earlier.

If the result of the comparison authorizes access, the interpreter module halts the operation for evaluating entitlements and executes the management functions specified in the access mode descriptor. A signal S output by the access control circuit 19 and applied to the decryption circuit 20 authorizes the decryption of the control words. The decrypted control words CWi are then output from the smartcard.

If the result of the comparison does not authorize access, the interpreter module carries out the functions described in the access mode descriptor corresponding to the case in which access is not authorized.

An advantage of the invention is that it defines the access modes with the aid of simple descriptors which can be designed directly by the service provider. It is then no longer necessary for the service provider to have recourse to a provider of access control programmes as is often the case in prior art conditional access systems.

Advantageously, the invention allows simple and inexpensive updating whilst ensuring a high level of security.

As is known to those skilled in the art, conditional access systems are mainly of two types.

A first type of system is commonly referred to as an on-line system. In an on-line system, the scrambled item IE(ECG) is an item consisting of a signal distributed simultaneously to the various customers of the service provider from a single source. This distribution can be performed, for example, over the airwaves or else by cable. In such a conditional access system, the ECM messages are sent by the service provider together with the scrambled item IE(ECG).

A second type of conditional access system is a system with a stand-alone data medium. In a system with a stand-alone data medium, the scrambled item IE(ECG) and the ECMs are contained on a stand-alone data medium such as, for example, a digital video disc commonly referred to as a DVD or else a compact disc commonly referred to as a CD.

The invention relates to both of the abovementioned types of conditional access systems.

According to the invention, the conditional access programs can be updated without the service provider needing to change the entire stock of smartcards and decoders which he supplies to his customers. This characteristic finds a particularly advantageous application in the case of conditional access systems with a stand-alone data medium in which the ECMs have a format such as that mentioned previously according to the invention.

## Claims

1. Message (ECM) containing access conditions (CDA) relating to at least one mode of access offered by a service provider, characterized in that it contains a datum (MA) making it possible to identify and validate the mode of access, and in that the access conditions (CDA) consist of a string of fields (CF1, CF2, ..., CFn), each field containing the description of an access condition (CAj).

2. Message (ECM) according to Claim 1, characterized in that each field comprises a header (HCj).

3. Message (EMM) containing a description of the entitlements (DU) possessed by a user with regard to at least one scrambled service delivered by a service provider, characterized in that the description of the user's entitlements consists of a string of fields (EF1, EF2, ..., EFm), each field comprising the description of an entitlement (Di).

4. Message (EMM) according to Claim 3, characterized in that each field comprises a header (HDi).

5. Conditional access system management message (MCMA) enabling a service provider to supply his services, according to at least one mode of access, to a user who has acquired entitlements to these services, characterized in that it contains at least one descriptor (DMA) of at least one mode of access.

6. Message (MCMA) according to Claim 5, characterized in that the access mode descriptor (DMA) consists of a descriptor of a comparison operation and of a descriptor of a management operation.

7. Message (MCMA) according to Claim 6, characterized in that the descriptor of the comparison operation consists of a list of elementary operators each of which is followed by the identifiers of its parameters and in that the descriptor of the management operation consists of a string of functions for calling up basic management functions.

8. Process for loading into a security element access conditions (CDA) relating to at least one mode of access offered by a service provider, characterized in that it comprises a step of downloading at least one datum (MA) making it possible to identify and validate the mode of access and in that it consists in loading the access conditions in the form of a string of fields (CF1, CF2 ..., CFn), each field containing the description of an access condition (CAj).

9. Process for loading into a security element entitlements (DU) possessed by a user with regard to at least one scrambled service (IE(ECG)) delivered by a service provider, characterized in that it consists in loading said entitlements in the form of a string of fields (EF1, EF2, ..., EFn), each field comprising the description of an entitlement (Di).

10. Process for loading into a security element at least one mode of access relating to a service offered by a service provider, characterized in that it comprises a step allowing the downloading of at least one datum (MA) making it possible to identify and validate the mode of access and a step making it possible to load at least one descriptor (DMA) of the mode of access.

11. Process according to Claim 10, characterized in that the step making it possible to load at least one descriptor (DMA) of the mode of access is a step of downloading said descriptor (DMA).

12. Process making it possible to descramble a scrambled service (IE(ECG)) supplied by a service provider to a user, said process comprising at least one step making it possible to load into a security element at least one mode of access relating to said service, at least one step making it possible to supply, via a first message (ECM), a description of the conditions of access to the scrambled service, at least one step making it possible to validate the access conditions, a step making it possible to supply, via a second message (EMM), a description of the user's entitlements to the scrambled service and a step making it possible to validate the user's entitlements, characterized in that the step making it possible to load into a security element at least one mode of access comprises a step of downloading at least one datum (MA) making it possible to identify and validate the mode of access and a step of loading at least one descriptor (DMA) of the mode of access comprising a descriptor of a comparison operation and a descriptor of a management operation, in that the step making it possible to supply a description of the access conditions makes it possible to define the access conditions as a first string of fields (CF1, CF2 ..., CFn) and in that the step making it possible to supply a description of the user's entitlements makes it possible to define the user's entitlements as a second string of fields (EF1, EF2, ..., EFm).

13. Process according to Claim 12, characterized in that the step of loading the descriptor (DMA) is a step of downloading the descriptor (DMA).

14. Process according to Claim 12 or 13, characterized in that it comprises a step whereby, for at least one mode of access, an interpreter module stored in the security element can search for the access mode descriptor corresponding thereto and, for each of the user's validated entitlements, can execute the function for comparing between at least one field (CFi) of the first string of fields (CF1, CF2, ... CFn) and at least one field (EF1, EF2, ..., EFm) of the second string of fields in such a way that, if the result of the comparison authorizes access, the interpreter module executes the management operation and, if the result of the comparison does not authorize access, the interpreter module carries out the functions described in the access mode descriptor corresponding to the case in which access is not authorized.

15. Security element (14) enabling a user to access a service, the security element comprising a first memory circuit (16) making it possible to store the validated entitlements possessed by a user with regard to a service and an access control circuit (19) making it possible to compare with the validated entitlements the validated access conditions associated with at least one mode of access, characterized in that it comprises a second memory circuit (17) making it possible to store at least one mode of access in the form of descriptors of the mode of access and in that the access control circuit comprises an interpreter module making it possible to determine whether at least one mode of access is or is not authorized and, for an authorized mode of access, to search for at least one descriptor of the authorized mode of access, the descriptor of the authorized mode of access comprising a descriptor of a comparison operation and a descriptor of a management operation, the implementation of the management operation following upon the implementation of the comparison operation and making it possible to generate a signal authorizing or not authorizing access to the service.

16. Security element (14) according to Claim 15, characterized in that the interpreter module comprises a list of basic management functions.

17. Security element (14) according to either one of Claims 15 or 16, characterized in that the second memory circuit (17) comprises an electronically erasable memory area.

18. Conditional access system enabling a service provider to supply his services only to users who have acquired entitlements to these services, the services consisting of an item scrambled by control words, the system comprising, for each user, at least one decoder and at least one security element, characterized in that the security element is a security element according to any one of Claims 15 to 17.
